# EUROPEAN PATENT SPECIFICATION

(11) **EP 2 568 689 B1**
(45) Date of publication and mention of the grant of the patent: **31.05.2017**
(21) Application number: 10851017.3
(22) Date of filing: 10.12.2010
(51) Int. Cl.: H04L 29/10

(54) **DOWNLOAD METHOD AND SYSTEM BASED ON MANAGEMENT DATA INPUT/OUTPUT INTERFACE**
DOWNLOADVERFAHREN UND SYSTEM AUF DER BASIS EINER SCHNITTSTEILE ZUR EINGABE/AUSGABE VON VERWALTUNGSDATEN
PROCÉDÉ ET SYSTÈME DE TÉLÉCHARGEMENT BASÉ SUR UNE INTERFACE D'ENTRÉE/SORTIE DE DONNÉES DE GESTION

(30) Priority: 06.05.2010 CN 201010173383
(43) Date of publication of application: 13.03.2013
(73) Proprietor: ZTE Corporation, Shenzhen, Guangdong 518057 (CN)
(72) Inventor: ZHANG, Yun, Guangdong 518057 (CN); FANG, Yu, Guangdong 518057 (CN)
(74) Representative: D'Halleweyn, Nele Veerle Trees Gertrudis
(86) International application number: PCT/CN2010/079647
(87) International publication number: WO 2011/137648

(56) References cited:
- WO-A1-2010/021120
- CN-A- 101 162 440
- CN-A- 101 197 770
- CN-A- 101 437 179
- JP-A- 2008 118 349
- US-A- 5 946 462
- US-A1- 2005 132 247
- US-A1- 2007 101 043
- US-A1- 2008 159 288
- US-A1- 2010 027 565
- 'IEEE Std 802.3ae-2002 (Amendent to IEEE Std 802.3-2002)' IEEE, [Online] 30 August 2002, XP017603544 Retrieved from the Internet: <URL:http://ieeexplore.ieee.org/stamp/stamp .j sp?tp=&arnumber=1040118>

## Description

### Field of the Invention

The present invention relates to the communication field, and more particularly to a download method and system based on a Management Data Input/Output (MDIO) interface.

### Background of the Invention

For Gigabit Ethernet, a serial communication bus is called MDIO. The bus is defined by terms of Ethernet standards Institute of Electrical and Electronics Engineers (IEEE) 802.3 of the IEEE. The MDIO is a simple double-wire serial interface that connects a management device (e.g. a Media Access Control (MAC) controller or a microprocessor) with a transceiver (e.g. a multi-port Gigabit Ethernet transceiver or a 10 Gigabit Ethernet 10 Attachment Unit Interface (10GbE XAUI) transceiver) with management functions, so that the management device can control the transceiver and collect status information from the transceiver.

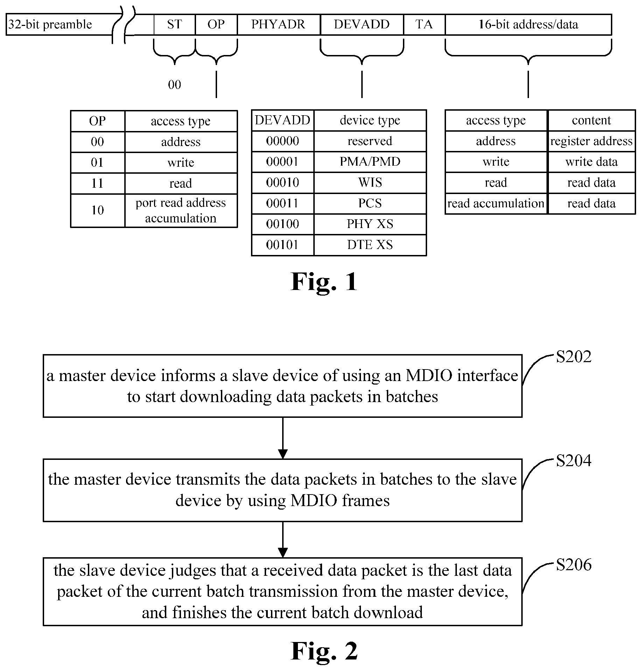

With the development of optical transmission technologies and data services, transponders are widely applied. Functions and interfaces of 100G transponders and 100G C Form-factor Pluggable (CFP) transponders have been defined by relevant international standards, but definition for the online download function of optical modules is still absent. With the growing complexity of optical module functions and the increasing improvement on optical module performance, the online upgrading ability of optical module software is critical for system equipment manufacturers. Recently, mainstream optical module manufacturers have begun defining a set of Internet Access Point (IAP) protocols based on existing hardware interfaces. However, transmission of large batch data is not taken into consideration in the protocols. In addition, in 64bits of a frame structure (as shown in Fig. 1) in an existing MDIO interface, there are only 16bits of effective data information which takes 25% of the whole frame length. It means that, the time for transmitting a 1MByte file is only 4 times as much as that for downloading the effective information only. Therefore, it is low in performance and efficiency to implement the IAP protocols by existing MDIO frame structures and communication mechanisms, the download time is long, and repeated download failures occur easily.

US 2007/101043, US 2008/159288, US 5946462, and US 2010/027565 provide respective technical solutions; however, the above mentioned problem still remains unsolved.

### Summary of the Invention

The present invention provides a download method and system based on an MDIO interface to solve the problems that it is low in performance and efficiency to implement the IAP by existing MDIO frame structures and communication mechanisms, the download time is long and repeated download failures occur easily.

According to an aspect of the present invention, a download method based on an MDIO interface is provided, comprising: a master device informing a slave device of using the MDIO interface to start downloading data packets in batches; the master device transmitting data packets in batches to the slave device by using an MDIO frame, wherein the MDIO frame comprises: a data packet address field and/or a data packet serial number field, wherein the data packet address field is used to indicate a relative address of one data packet in the slave device, and the data packet serial number field is used to indicate a location of said one data packet in multiple data packets; and the slave device judging that a received data packet is a last data packet of a current batch transmission from the master device, and finishing a current batch download.

Preferably, the MDIO frame uses an idle field of a set number of bits to replace a preamble field.

Preferably, the step of the master device informing the slave device of using the MDIO interface to start downloading the data packets in batches comprises: the master device informing, through an MDIO protocol command, the slave device of using the MDIO interface to start downloading the data packets in batches, wherein the MDIO protocol command comprises download register information, wherein the download register information comprises serial numbers of the data packets transmitted in batches by the master device to the slave device; the step of the slave device judging that a received data packet is the last data packet in the data packets transmitted in batches by the master device comprises: the slave device judging according to a serial number that the received data packet is the last data packet in the data packets transmitted in batches by the master device.

Preferably, the step of the slave device judging that a received data packet is the last data packet of the current batch transmission from the master device comprises: the slave device receiving one MDIO frame transmitted by the master device, parsing out a data packet from the MDIO frame, and storing data of the data packet in the slave device according to an address indicated by the data packet address field or according to a serial number indicated by the data packet serial number field; and the slave device judging that the stored data packet is the last data packet of the current batch transmission from the master device.

Preferably, the download method based on the MDIO interface further comprises: during a process that the master device transmits the data packets in batches to the slave device by using the MDIO frame, the master device reading download status register information of the slave device through an MDIO protocol command; the master device judging, according to the download status register information, whether the slave device receives a previous group of data packets normally; if so, starting downloading a new group of data packets in batches; otherwise, forcing the slave device to stop a batch download.

Preferably, the download method based on the MDIO interface further comprises: during a process that the master device transmits the data packets in batches to the slave device by using the MDIO frame, if an abnormality of the master device or the slave device occurs and a batch download of the data packets is not stopped, the master device setting a value of the data packet address field or the data packet serial number field of the MDIO frame to indicate the slave device to stop the batch download of the data packets.

Preferably, before the step of the master device informing the slave device of using the MDIO interface to start downloading the data packets in batches, the method further comprises: the master device setting a length of the MDIO frame according to hardware conditions of the slave device.

According to another aspect of the present invention, a download system based on an MDIO interface is provided, comprising: a master device and a slave device, wherein the master device comprises: an informing module, configured to inform the slave device of using the MDIO interface to start downloading data packets in batches; and a transmitting module, configured to transmit the data packets in batches to the slave device by using an MDIO frame, wherein the MDIO frame comprises: a data packet address field and/or a data packet serial number field, wherein the data packet address field is used to indicate a relative address of one data packet in the slave device, and the data packet serial number field is used to indicate a location of said one data packet in multiple data packets; the slave device comprises: a judging module, configured to judge that a received data packet is a last data packet of a current batch transmission from the master device; and a stopping module, configured to stop a current batch download.

Preferably, the MDIO frame uses an idle field of a set number of bits to replace a preamble field.

Preferably, the informing module of the master device comprises: an MDIO command module, configured to: inform, through an MDIO protocol command, the slave device of using the MDIO interface to start downloading the data packets in batches, wherein the MDIO protocol command comprises download register information, wherein the download register information comprises serial numbers of the data packets transmitted in batches by the master device to the slave device; the judging module of the slave device comprises: a command receiving module, configured to receive the MDIO protocol command and acquire the serial numbers; and a serial number judging module, configured to judge according to a serial number that a received data packet is the last data packet of the current batch transmission from the master device.

Preferably, the master device further comprises: an acquiring module, configured to: during a process of transmitting the data packets in batches to the slave device by using the MDIO frame, read download status register information of the slave device through an MDIO protocol command; and an executing module, configured to: judge, according to the download status register information, whether the slave device receives a previous group of data packets normally; if so, start downloading a new group of data packets in batches; otherwise, force the slave device to stop a batch download.

Preferably, the master device further comprises: a setting module, configured to: during a process of transmitting the data packets in batches to the slave device by using the MDIO frame, if an abnormality of the master device or the slave device occurs and a batch download of the data packets is not stopped, set a value of the data packet address field or the data packet serial number field of the MDIO frame to indicate the slave device to stop the batch download of the data packets.

By using a new communication handshake mechanism, the present invention enables the master device and the slave device to perform the batch data download effectively, thus solving the problem in related technologies that large batch data transmission cannot be performed for download based on the MDIO interface. In addition, the present invention applies a new MDIO frame structure to adapt the MDIO frame to batch data download requirements and improve data download efficiency.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram illustrating an MDIO frame structure in a related technology;
Fig. 2 is a flowchart of a download method based on an MDIO interface according to an embodiment of the present invention;
Fig. 3 is a flowchart of another download method based on an MDIO interface according to an embodiment of the present invention;
Fig. 4 is a schematic diagram illustrating grouping of data packets to be downloaded in a batch download process based on an MDIO interface according to an embodiment of the present invention;
Fig. 5 is a flowchart illustrating a third download method based on an MDIO interface according to an embodiment of the present invention;
Fig. 6 is a schematic diagram illustrating an MDIO frame structure according to an embodiment of the present invention;
Fig. 7 is a structural block diagram illustrating a download system based on an MDIO interface according to an embodiment of the present invention; and
Fig. 8 is a structural block diagram illustrating another download system based on an MDIO interface according to an embodiment of the present invention.

### Detailed Description of the Embodiments

The present invention will be described in details below with reference to the accompanying drawings and in combination with the embodiments. It should be noted that, if there is no conflict, the embodiments of the application and the characteristics in the embodiments can be combined with one another.

Fig. 2 shows a flowchart of a download method based on an MDIO interface according to an embodiment of the present invention, and the method comprises the following steps.

Step 202: a master device informs a slave device of using the MDIO interface to start downloading data packets in batches.

For example, when learning that the slave device needs to download data in batches, the master device informs the slave device of using the MDIO interface to enter a batch download status to start downloading the data packets in batches. In the present step, preferably, by using a standard MDIO protocol command, the master device can inform the slave device of starting downloading the data packets in batches, wherein the MDIO protocol command comprises information for starting the slave device to enter a batch download process and can further comprise data packet download register information, such as a slave device MDIO address, and an address or a serial number of a data packet to be transmitted etc.

Step 204: the master device transmits the data packets in batches to the slave device by using an MDIO frame;
wherein the MDIO frame comprises: a data packet address field used to indicate a relative address of one data packet in the slave device and/or a data packet serial number field used to indicate a location of one data packet in multiple data packets.

The data packet address field and/or the data packet serial number field are/is set in the MDIO frame to transmit data in batches effectively, thus meeting requirements of downloading the data packets in batches by the master device and the slave device.

Step 206: the slave device judges that a received data packet is the last data packet of the current batch transmission from the master device, and finishes the current batch download.

The slave device receives the data packets transmitted by the master device. When all data packets are transmitted to the slave device normally, the slave device judges that a data packet is the last data packet of the current batch download of the data packets. At this time, the slave device exits the batch download status automatically, or the master device initiates that the master device and the slave device exit the batch download status simultaneously, and the batch download is finished.

In related technologies, the transmission of large batch of data is not considered when IAP protocols are implemented, therefore, MDIO frame structures and communication mechanisms for implementing the IAP protocols are low in performance and efficiency, the download time is long, and repeated download failures occur easily. The present embodiment applies a new handshake mechanism adapted to batch data download and an MDIO frame structure adapted to the mechanism, thus effectively solving the problem of batch data download and improving the data download efficiency.

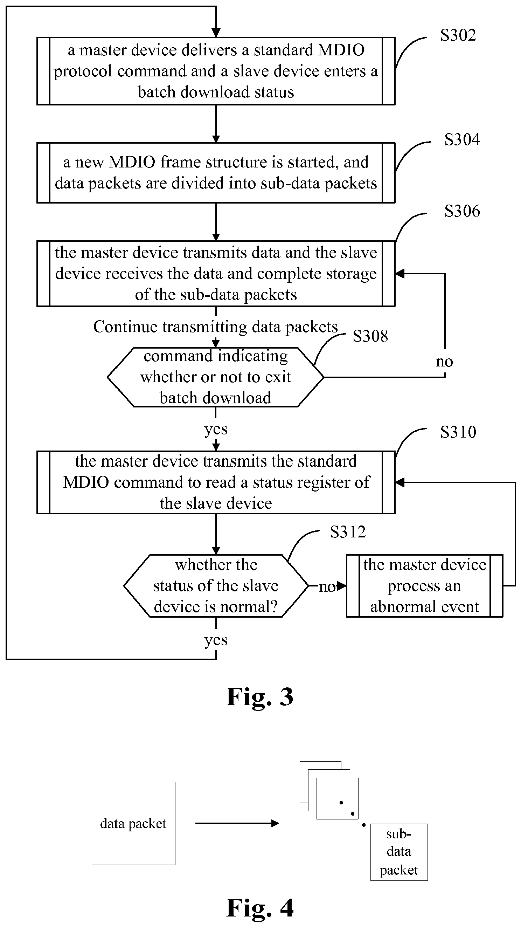

Fig. 3 shows a flowchart of another download method based on an MDIO interface according to an embodiment of the present invention, and the method comprises the following steps.

Step 302: a master device informs, through a standard MDIO protocol command, a slave device of entering a batch download status to start downloading data packets in batches.

Step 304: by using the MDIO frame structure, the master device transmits the data packets in batches to the slave device in a batch packaging method.

In the method, the MDIO frame comprises: a data packet address field used to indicate the relative address of one data packet in the slave device and/or a data packet serial number field used to indicate the location of one data packet in multiple data packets. The difference between the MDIO frame in the present embodiment and an existing standard MDIO frame further comprises that: a preamble field of the existing standard MDIO frame is removed and replaced by an idle field of a set number of bits, e.g. an idle field of 2 to 4 bits. The idle field is used to indicate the MDIO frame as a new MDIO frame, wherein the number of bits of the idle field can be set properly by those skilled in the art according to actual conditions. The size of the MDIO frame can be defined according to hardware conditions of the slave device, e.g. if the MDIO interface of the slave device is provided with ample buffer, the MDIO standard frame length 64bit does not need to be satisfied.

In the present step, the master device can apply the method as shown in Fig. 4 to transmit the data packets to the slave device according to the batch packaging method. The size of a data packet can be determined comprehensively according to the download efficiency and the processing difficulty of handling abnormal events.

Step 306: the slave device finishes download register address mapping, and receives and stores the data packets transmitted by the master device.

The slave device acquires the data packet address field and/or the data packet serial number field from the MDIO frame, determines the address of a currently-transmitted data packet in the slave device, receives the data packet transmitted by the master device and stores the data packet in the corresponding address.

Once entering the batch download status, the slave device will no longer respond to the standard MDIO command transmitted by the master device.

Step 308: when receiving the last data packet transmitted by the master device, the slave device exits the batch download status automatically, or the master device initiates that the master device and the slave device exit the batch download status simultaneously, and the batch data packet download is finished.

For example, according to the serial numbers of the data packets transmitted in batches by the master device to the slave device in the download register information of the MDIO protocol command transmitted by the master device, the slave device, when receiving a data packet transmitted by the master device, can judge whether the data packet is the last data packet of the current batch download according to a serial number. The process is implemented easily, thus saving system design cost.

Step 310: the master device communicates with the slave device through the standard MDIO protocol command and reads the download status of the slave device to determine whether the previous group of data packets are received normally.

In the present step, the master device can read download status register information of the slave device to acquire the download status of the slave device therein.

Step 312: if the download status of the slave device is normal, then a download process of a new group of data packets can be started directly; otherwise, the master device judges that an abnormality occurs, and starts a corresponding processing process to solve the abnormality directly.

In the case that any abnormality occurs during the download process, the master device can transmit a special command to force the slave device to exit the batch download status.

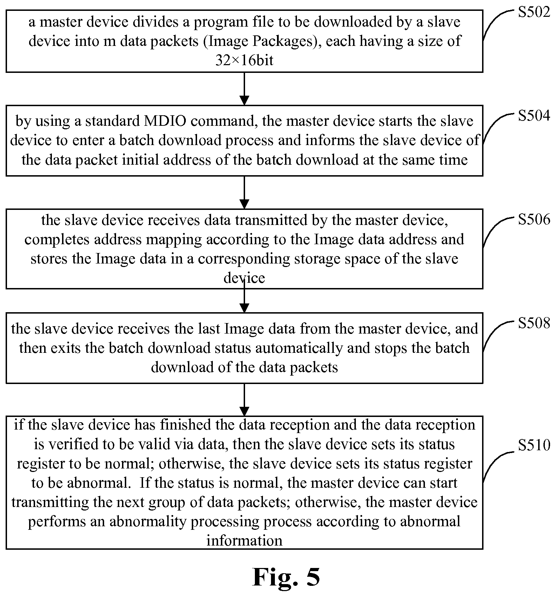

Fig. 5 shows a flowchart illustrating a third download method based on an MDIO interface according to an embodiment of the present invention, and the method comprises the following steps.

Step 502: a master device divides a program file to be downloaded by a slave device into m data packets (Image Packages), wherein the size of each data packet is 32×16bit, 32 corresponds to the number of sub-data packets (image data) into which the data packet is divided continuously, and 16bit corresponds to the register size of a commonly-used MDIO interface of the slave device.

When a batch download process is started, the size of a sub-data packet which is the fundamental unit for data transmission is generally limited by bottom layer device conditions of the master device and the slave device, so that the MDIO frame structure and the communication handshake mechanism can adapt to data transmission among multiple kinds of devices. There are flexible and varied MDIO frame structures and communication handshake mechanisms.

Step 504: by using a standard MDIO command, the master device starts the slave device to enter a batch download process and informs the slave device of the data packet initial address (relative address in the slave device) of the batch download at the same time. Table 1 shows implementation of the download function defined by the MDIO interface of the master device, where A0F8 is the slave device MDIO address which needs to be written to start the download, the written data Image Package SerialNo represents the relative address of the data packet (Image Package) which will be written in the slave device by the master device. The MDIO command comprises the download register information so that the slave device can acquire the storage address of the data packet from the MDIO command directly.

**Table 1 MDIO data packet Download Register Information**

| Address | Size | Access type | Bit | Register name | Description | Integral value |
|---|---|---|---|---|---|---|
| A0F8 | 2 | RW | 15∼0 | Image Package SerialNo | Image Package SerialNo | 0 |

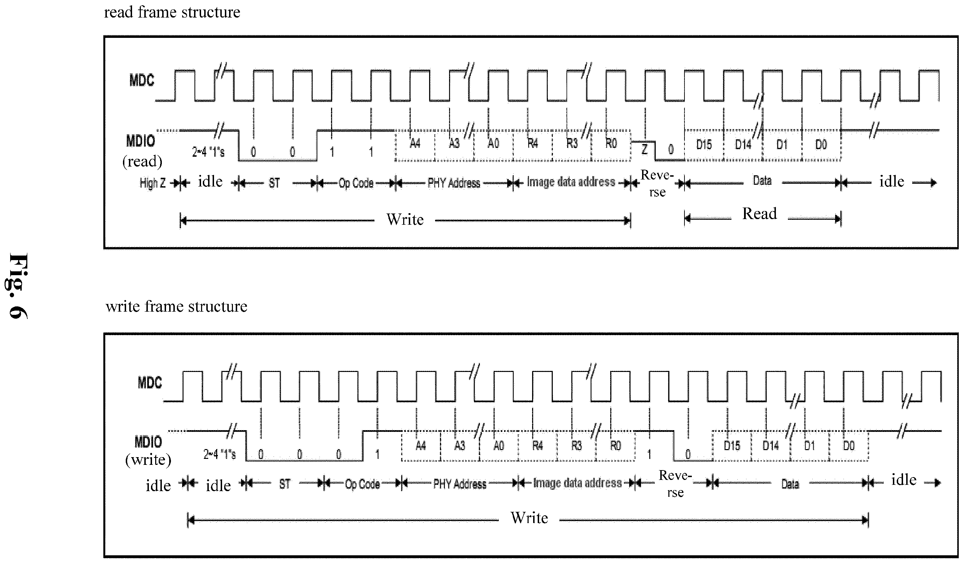

In the present step, a redefined batch download MDIO frame structure is as shown in Fig. 6. The MDIO frame removes the preamble of a standard MDIO frame and replaces it by a set number (e.g. 2 to 4) of idle bits. The "Device Type" field in the standard MDIO frame is changed into an Image data address field (relative address of the sub-data packet in the slave device) or an Image data serialNo field (sub-data packet serial number). In the embodiment, the "Device Type" field in the standard MDIO frame is changed into the Image data address field (the sub-data packet address), wherein the range of the address is 0 to 31. The master device starts to deliver sub-data packets to the slave device according to the new MDIO frame structure.

Step 506: the slave device receives data transmitted by the master device, completes address mapping according to the Image data address and stores the Image data in a corresponding storage space of the slave device.

Step 508: the slave device receives the last Image data from the master device, i.e. Image data address=31, then exits the batch download status automatically and stops the batch data packet download.

Step 510: if the slave device has finished the data reception and the data reception is verified to be valid via data, the slave device sets its status register to be normal; otherwise, the slave device sets its status register to be abnormal. The master device reads status register information of the slave device through a standard MDIO command. The status register information is as shown in Table 2, where A0F2 is the register address of the slave device MDIO and "Download Status" represents the download status of the status register. If the status is normal, the master device can start transmission of the next group of data packets; otherwise, an abnormality processing process is performed according to abnormal information.

**Table 2 MDIO Download Status Register Information**

| Address | Size | Access type | Bit | Register name | Description | Integral value |
|---|---|---|---|---|---|---|
| A0F2 | 2 | RO | 15∼11 | Download Status | Download status definition | 0 |
| | | | 10∼8 | Upload Status | Upload status definition | 0 |
| | | | 7∼0 | Reserved | | 0 |

Particularly, if either the master device or the slave device is abnormal during the download process, but the slave device has not exited the batch download status after the abnormality is recovered, then the master device can write a non-address value in the last Image data address directly to force the slave device to exit the batch download status.

By judging whether the download status of the slave device is normal, a problem arising in the download process of the data packets can be discovered in time and solved correspondingly, thus avoiding repeated transmission of a large amount of data.

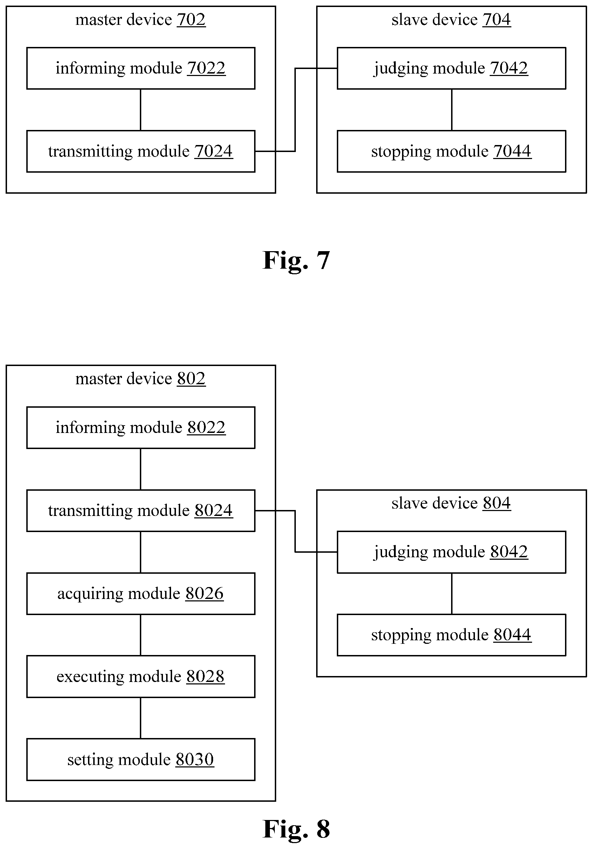

Fig. 7 shows a structural block diagram illustrating a download system based on an MDIO interface according to an embodiment of the present invention. The system comprises: a master device 702 and a slave device 704.

The master device 702 comprises: an informing module 7022, configured to inform the slave device 704 of using the MDIO interface to start downloading data packets in batches; a transmitting module 7024, configured to transmit the data packets in batches to the slave device 704 by using an MDIO frame, wherein the MDIO frame comprises: a data packet address field and/or a data packet serial number field, wherein the data packet address field is used to indicate the relative address of one data packet in the slave device 704, and the data packet serial number field is used to indicate the location of one data packet in multiple data packets.

The slave device 704 comprises: a judging module 7042, configured to judge that a received data packet is the last data packet of the current batch transmission from the master device 702; a stopping module 7044, configured to stop the current batch download.

For example, when the master device and the slave device start the batch download of the data packets, the informing module 7022 of the master device 702 firstly informs the slave device 704 of using the MDIO interface to start downloading the data packets in batches. The transmitting module 7024 of the master device 702 transmits the data packets in batches to the slave device 704 by using the MDIO frame, wherein the MDIO frame comprises: a data packet address field used to indicate the relative address of one data packet in the slave device 704 and/or a data packet serial number field used to indicate the location of one data packet in multiple data packets. The slave device 704 receives the data packets transmitted by the master device 702. The judging module 7042 judges that a received data packet is the last data packet of the current batch transmission from the master device 702, then the stopping module 7044 stops the current batch download.

Fig. 8 shows a structural block diagram illustrating another download system based on an MDIO interface according to an embodiment of the present invention. The system comprises: a master device 802 and a slave device 804.

The master device 802 comprises: an informing module 8022, configured to inform the slave device 804 of using the MDIO interface to start downloading data packets in batches; a transmitting module 8024, configured to transmit the data packets in batches to the slave device 804 by using an MDIO frame, wherein the MDIO frame comprises: a data packet address field and/or a data packet serial number field, wherein the data packet address field is used to indicate the relative address of one data packet in the slave device 804, and the data packet serial number field is used to indicate the location of one data packet in multiple data packets.

Preferably, the MDIO frame uses an idle field of a set number of bits to replace a preamble field of the existing MDIO frame to indicate the beginning of a new MDIO frame.

Preferably, the master device 802 further comprises: an acquiring module 8026, configured to, during the process of transmitting the data packets in batches to the slave device 804 by using the MDIO frame, read download status register information of the slave device 804 through an MDIO protocol command; an executing module 8028 configured to, according to the download status register information, judge whether the slave device 804 receives the previous group of data packets normally; if so, start downloading a new group of batch data packets; otherwise, force the slave device 804 to stop the batch download.

Preferably, the master device 802 further comprises: a setting module 8030 configured to, during the process of transmitting the data packets in batches to the slave device 804 by using the MDIO frame, if an abnormality of the master device 802 or the slave device 804 occurs and the batch download of the data packets is not stopped, set the value of the data packet address field or the data packet serial number field of the MDIO frame to indicate the slave device 804 to stop the batch download of the data packets.

Preferably, the informing module 8022 of the master device 802 comprises: an MDIO command module configured to, through an MDIO protocol command, inform the slave device 804 of using the MDIO interface to start downloading the data packets in batches; wherein the MDIO protocol command comprises download register information, the download register information comprises serial numbers of the data packets transmitted by the master device 802 to the slave device 804.

Preferably, the master device 802 further comprises: a frame length setting module configured to, before the informing module 8022 informs the slave device 804 of using the MDIO interface to download the data packets in batches, set a length of the MDIO frame according to hardware conditions of the slave device 804.

The slave device 804 comprises: a judging module 8042 configured to judge that a received data packet is the last data packet of the current batch transmission from the master device 802; a stopping module 8044, configured to stop the current batch download.

Preferably, the judging module 8042 is configured to receive one MDIO frame transmitted by the master device 802, parse out a data packet from the MDIO frame, store data of the data packet in the slave device 804 according to an address indicated by the data packet address field or according to a serial number indicated by the data packet serial number field, and judge that the stored data packet is the last data packet of the batch transmission from the master device 802.

Preferably, the judging module 8042 comprises: a command receiving module configured to receive the MDIO protocol command and acquire serial numbers of the data packets transmitted in batches by the master device to the slave device; a serial number judging module configured to judge according to a serial number that a received data packet is the last data packet of the current batch transmission from the master device 802. For example, by using the MDIO protocol command, the MDIO command module in the informing module 8022 of the master device 802 informs the slave device 804 of using the MDIO interface to start downloading the data packets in batches. The MDIO protocol command comprises the download register information of the serial numbers of the data packets transmitted in batches by the master device 802 to the slave device 804. The transmitting module 8024 transmits the data packets in batches to the slave device 804 by using the MDIO frame, wherein the MDIO frame comprises: a data packet address field and/or a data packet serial number field, and uses an idle field of a set number of bits to replace a preamble field of the existing MDIO frame, so as to indicate the beginning of a new MDIO frame. The data packet address field in the MDIO frame is used to indicate the relative address of one data packet in the slave device 804; the data packet serial number field is used to indicate the location of one data packet in multiple data packets.

Particularly, in the process of transmitting the data packets in batches to the slave device 804 by using the MDIO frame, the acquiring module 8026 of the master device 802 reads download status register information of the slave device 804 by using the MDIO command. The executing module 8028 judges whether the slave device 804 receives the previous group of data packets normally according to the download status register information. If so, a new group of data packets start to be downloaded in batches; otherwise, the slave device 804 is forced to stop the batch download. In addition, in the process of transmitting the data packets in batches to the slave device 804 by using the MDIO frame, if an abnormality occurs in the master device 802 or the slave device 804 and when the batch download of the data packets is not stopped, the setting module 8030 of the master device 802 sets the value of the data packet address field or the data packet serial number field of the MDIO frame to indicate the slave device 804 to stop the batch download of the data packets.

The slave device 804 receives the data packets transmitted by the master device 802. When the judging module 8042 judges that a received data packet is the last data packet of the current batch transmission from the master device 802, the stopping module 8044 informs the slave device 804 of finishing the current batch download. Preferably, the command receiving module of the judging module 8042 receives the MDIO protocol command transmitted by the master device 802, and acquires the serial numbers of the data packets transmitted in batches by the master device 802 to the slave device 804. The serial number judging module judges according to a serial number that a received data packet is the last data packet of the current batch transmission from the master device 802. The stopping module 8044 informs the slave device 804 of finishing the current batch download.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A download method based on a Management Data Input/Output, MDIO, interface,
**characterized by** comprising:
a master device informing (S202), through an MDIO protocol command, a slave device of using the MDIO interface to start downloading data packets in batches, wherein the MDIO protocol command comprises download register information, wherein the download register information comprises serial numbers of the data packets transmitted in batches by the master device to the slave device;
the master device transmitting (S204) data packets in batches to the slave device by using MDIO frames, wherein each MDIO frame comprises: a data packet address field and a data packet serial number field, wherein the data packet address field is used to indicate a relative address of one data packet in the slave device, and the data packet serial number field is used to indicate a location of said one data packet in multiple data packets;
the slave device receiving the MDIO frames transmitted by the master device, parsing out data packets from the MDIO frames, and storing data of the data packets in the slave device according to the addresses indicated by the data packet address fields or according to the serial numbers indicated by the data packet serial number fields; and
the slave device judging (S206), according to the serial numbers of the data packets, that a received data packet is a last data packet of a current batch transmission from the master device, and finishing a current batch download.

2. The method according to claim 1, **characterized in that** the MDIO frame uses an idle field of a set number of bits to replace a preamble field.

3. The method according to claim 1 or 2, **characterized by** further comprising:
during a process that the master device transmits the data packets in batches to the slave device by using the MDIO frame, the master device reading download status register information of the slave device through an MDIO protocol command;
the master device judging, according to the download status register information, whether the slave device receives a previous group of data packets normally;
if so, starting downloading a new group of data packets in batches; otherwise, forcing the slave device to stop a batch download.

4. The method according to claim 1 or 2, **characterized by** further comprising:
during a process that the master device transmits the data packets in batches to the slave device by using the MDIO frame, if an abnormality of the master device or the slave device occurs and a batch download of the data packets is not stopped,
the master device setting a value of the data packet address field or the data packet serial number field of the MDIO frame to indicate the slave device to stop the batch download of the data packets.

5. The method according to claim 1 or 2, **characterized in that** before the step of the master device informing the slave device of using the MDIO interface to start downloading the data packets in batches, the method further comprises:
the master device setting a length of the MDIO frame according to hardware conditions of the slave device.

6. A download system based on an Management Data Input/Output, MDIO, interface, **characterized by** comprising: a master device (702) and a slave device (704), wherein
the master device (704) comprises:
an informing module (7022), configured to inform, through an MDIO protocol command, the slave device of using the MDIO interface to start downloading data packets in batches, wherein the MDIO protocol command comprises download register information, wherein the download register information comprises serial numbers of the data packets transmitted in batches by the master device to the slave device; and
a transmitting module (7024), configured to transmit the data packets in batches to the slave device by using an MDIO frame, wherein the MDIO frame comprises: a data packet address field and a data packet serial number field, wherein the data packet address field is used to indicate a relative address of one data packet in the slave device, and the data packet serial number field is used to indicate a location of said one data packet in multiple data packets;the slave device (704) comprises a command receiving module, which is configured to receive the MDIO protocol command and acquire the serial numbers; and
the slave device is configured to receive the MDIO frames transmitted by the master device, parse out data packets from the MDIO frames, and store data of the data packets in the slave device according to the addresses indicated by the data packet address fields or according to the serial numbers indicated by the data packet serial number fields;
wherein the slave device (704) further comprises:
a judging module (7042), configured to judge according to the serial numbers that a received data packet is a last data packet of a current batch transmission from the master device; and
a stopping module (7044), configured to stop a current batch download.

7. The system according to claim 6, **characterized in that** the MDIO frame uses an idle field of a set number of bits to replace a preamble field.

8. The system according to claim 6 or 7, **characterized in that** the master device further comprises:
a setting module (8030), configured to: during a process of transmitting the data packets in batches to the slave device by using the MDIO frame, if an abnormality of the master device or the slave device occurs and a batch download of the data packets is not stopped, set a value of the data packet address field or the data packet serial number field of the MDIO frame to indicate the slave device to stop the batch download of the data packets.

## Patentansprüche

1. Downloadverfahren auf der Basis einer Schnittstelle zur Eingabe/Ausgabe von Verwaltungsdaten (MDIO-Schnittstelle, Management Data Input/Output), **dadurch gekennzeichnet, dass** das Verfahren umfasst:
Informieren (S202) einer Slave-Vorrichtung, durch eine Master-Vorrichtung, über ein MDIO-Protokoll, dass eine MDIO-Schnittstelle verwendet werden soll, um einen Batch-Download von Datenpaketen zu starten, wobei der MDIO-Protokoll-Befehl Download-Registerinformationen umfasst, wobei die Download-Registerinformationen Seriennummern der Datenpakete, die als Batch-Download von der Master-Vorrichtung an die Slave-Vorrichtung übertragen werden, umfassen;
Übertragen (S204), durch die Master-Vorrichtung, von Datenpaketen an die Slave-Vorrichtung mit Hilfe von MDIO-Rahmen, wobei jeder MDIO-Rahmen ein Datenpaketadressfeld und ein Datenpaketseriennummerfeld umfasst, wobei das Datenpaketadressfeld verwendet wird, um eine relative Adresse eines Datenpakets in der Slave-Vorrichtung anzugeben, und das Datenpaketseriennummerfeld verwendet wird, um einen Standort des Datenpakets in mehreren Datenpaketen anzugeben;
Empfangen, durch die Slave-Vorrichtung, der von der Master-Vorrichtung übertragenen MDIO-Rahmen, Parsing, durch die Slave-Vorrichtung, von Datenpaketen aus den MDIO-Rahmen, sowie Speichern von Daten der Datenpakete, durch die Slave-Vorrichtung, in der Slave-Vorrichtung gemäß den von den Datenpaketadressfeldern angegebenen Adressen oder gemäß den von den Datenpaketseriennummerfeldern angegebenen Seriennummern; und
Beurteilen (S206), durch die Slave-Vorrichtung, gemäß den Seriennummern der Datenpakete, dass es sich bei einem empfangenen Datenpaket um ein letztes Datenpaket aus einer Übertragung eines aktuellen Batch-Downloads von einer Master-Vorrichtung handelt, und Beenden des aktuellen Batch-Downloads.

2. Verfahren gemäß Anspruch 1, **dadurch gekennzeichnet, dass** der MDIO-Rahmen ein freies Feld aus einer festen Anzahl von Bits verwendet, um ein Präambelfeld zu ersetzen.

3. Verfahren gemäß Anspruch 1 oder 2, **dadurch gekennzeichnet, dass** das Verfahren weiterhin umfasst:
während eines Vorgangs, bei dem die Master-Vorrichtung die Datenpakete als Batch-Download mit Hilfe des MDIO-Rahmens an die Slave-Vorrichtung überträgt, Lesen, durch die Master-Vorrichtung, von Downloadstatus-Registerinformationen der Slave-Vorrichtung über einen MDIO-Protokoll-Befehl;
Beurteilen, durch die Master-Vorrichtung, gemäß den Downloadstatus-Registerinformationen, ob die Slave-Vorrichtung eine vorherige Gruppe von Datenpaketen normal empfangen hat;
wenn Ja, Beginnen des Batch-Downloads einer neuen Gruppe von Datenpaketen; wenn Nein, Zwingen der Slave-Vorrichtung, den Batch-Download zu stoppen.

4. Verfahren gemäß Anspruch 1 oder 2, **dadurch gekennzeichnet, dass** das Verfahren weiterhin umfasst:
während eines Vorgangs, bei dem die Master-Vorrichtung die Datenpakete mit Hilfe des MDIO-Rahmens an die Slave-Vorrichtung überträgt, wenn eine Anomalie bei der Master-Vorrichtung oder der Slave-Vorrichtung auftritt und ein Batch-Download von Datenpaketen nicht gestoppt wird,
Einstellen, durch die Master-Vorrichtung, eines Wertes des Datenpaketadressfelds oder des Datenpaketseriennummerfelds des MDIO-Rahmens, um der Slave-Vorrichtung anzuzeigen, dass der Batch-Download von Datenpaketen gestoppt werden soll.

5. Verfahren gemäß Anspruch 1 oder 2, **dadurch gekennzeichnet, dass** vor dem Schritt des Informierens der Slave-Vorrichtung durch die Master-Vorrichtung, dass eine MDIO-Schnittstelle verwendet werden soll, um den Batch-Download von Datenpaketen zu starten, das Verfahren weiterhin umfasst:
Einstellen einer Länge des MDIO-Rahmens, durch eine Master-Vorrichtung, gemäß Hardwarebedingungen der Slave-Vorrichtung.

6. Downloadsystem auf der Basis einer Schnittstelle zur Eingabe/Ausgabe von Verwaltungsdaten (MDIO-Schnittstelle, Management Data Input/Output), **dadurch gekennzeichnet, dass** das System umfasst:
eine Master-Vorrichtung (702) und eine Slave-Vorrichtung (704), wobei die Master-Vorrichtung (704) umfasst:
ein Informationsmodul (7022), das dazu konfiguriert ist, die Slave-Vorrichtung über ein MDIO-Protokoll zu informieren, dass eine MDIO-Schnittstelle verwendet werden soll, um den Batch-Download von Datenpaketen zu starten, wobei der MDIO-Protokoll-Befehl Download-Registerinformationen umfasst, wobei die Download-Registerinformationen Seriennummern der Datenpakete, die als Batch-Download von der Master-Vorrichtung an die Slave-Vorrichtung übertragen werden, umfassen; und
ein Übertragungsmodul (7024), das dazu konfiguriert ist, die Datenpakete als Batch-Download mit Hilfe eines MDIO-Rahmens an die Slave-Vorrichtung zu übertragen, wobei der MDIO-Rahmen ein Datenpaketadressfeld und ein Datenpaketseriennummerfeld umfasst, wobei das Datenpaketadressfeld verwendet wird, um eine relative Adresse eines Datenpakets in der Slave-Vorrichtung anzugeben, und das Datenpaketseriennummerfeld verwendet wird, um einen Standort des Datenpakets in mehreren Datenpaketen anzugeben;
wobei die Slave-Vorrichtung (704) ein Modul zum Empfang von Befehlen umfasst, das dazu konfiguriert ist, den MDIO-Protokoll-Befehl zu empfangen und die Seriennummern zu erfassen; und
wobei die Slave-Vorrichtung dazu konfiguriert ist, die von der Master-Vorrichtung übertragenen MDIO-Rahmen zu empfangen, die Datenpakete aus den MDIO-Rahmen zu parsen, sowie die Daten der Datenpakete in der Slave-Vorrichtung gemäß den von den Datenpaketadressfeldern angegebenen Adressen oder gemäß den von den Datenpaketseriennummerfeldern angegebenen Seriennummern zu speichern;
wobei die Slave-Vorrichtung (704) weiterhin umfasst:
ein Beurteilungsmodul (7042), das dazu konfiguriert ist, gemäß den Seriennummern zu beurteilen, dass es sich bei einem empfangenen Datenpaket um ein letztes Datenpaket aus einer Übertragung eines aktuellen Batch-Downloads von der Master-Vorrichtung handelt; und
ein Stoppmodul (7044), das dazu konfiguriert ist, den aktuellen Batch-Download zu stoppen.

7. System gemäß Anspruch 6, **dadurch gekennzeichnet, dass** der MDIO-Rahmen ein freies Feld mit einer festen Anzahl von Bits verwendet, um ein Präambelfeld zu ersetzen.

8. System gemäß Anspruch 6 oder 7, **dadurch gekennzeichnet, dass** die Master-Vorrichtung weiterhin umfasst:
ein Einstellungsmodul (8030), das dazu konfiguriert ist: während eines Vorgangs, bei dem die Datenpakete als Batch-Download mit Hilfe des MDIO-Rahmens an die Slave-Vorrichtung übertragen werden, wenn eine Anomalie bei der Master-Vorrichtung oder der Slave-Vorrichtung auftritt und ein Batch-Download von Datenpaketen nicht abgebrochen wird, einen Werte des Datenpaketadressfelds oder des Datenpaketseriennummerfelds des MDIO-Rahmens einzustellen, um der Slave-Vorrichtung anzuzeigen, dass der Batch-Download von Datenpaketen gestoppt werden soll.

## Revendications

1. Procédé de téléchargement reposant sur une interface d'entrée/sortie de données de gestion (MDIO, Management Data Input/Output), **caractérisé en ce qu'**il comprend les étapes au cours desquelles :
un dispositif maître ordonne (S202) à un dispositif esclave, au moyen d'une commande de protocole MDIO, d'utiliser l'interface MDIO pour commencer à télécharger des paquets de données par lots, ladite commande de protocole MDIO comprenant des informations de registre de téléchargement, lesdites informations de registre de téléchargement comprenant les numéros de série des paquets de données transmis par lots par le dispositif maître auprès du dispositif esclave, le dispositif maître transmet (S204) des paquets de données par lots auprès du dispositif esclave au moyen de trames MDIO, chacune desdites trames MDIO comprenant : un champ d'adresse du paquet de données et un champ de numéro de série du paquet de données, ledit champ d'adresse du paquet de données servant à indiquer l'adresse relative d'un paquet de données dans le dispositif esclave, et ledit champ de numéro de série du paquet de données servant à indiquer l'emplacement dudit un paquet de données parmi de multiples paquets de données,
le dispositif esclave reçoit les trames MDIO transmises par le dispositif maître, analyse les paquets de données à partir des trames MDIO, et stocke les données des paquets de données dans le dispositif esclave conformément aux adresses indiquées par le champs d'adresse des paquets de données ou conformément aux numéros de série indiqués par le champ de numéro de série des paquets de données, et
le dispositif esclave détermine (S206), conformément aux numéros de série des paquets de données, qu'un paquet de données reçu est le dernier paquet de données d'une émission actuelle de lots en provenance du dispositif maître, et finit le téléchargement d'un lot actuel.

2. Procédé selon la revendication 1, **caractérisé en ce que** la trame MDIO emploie un champ inactif d'un nombre défini de bits pour remplacer un champ de préambule.

3. Procédé selon la revendication 1 ou 2, **caractérisé en ce qu'**il comprend en outre les étapes au cours desquelles :
pendant le déroulement de la transmission des paquets de données par lots, par le dispositif maître auprès du dispositif esclave au moyen de la trame MDIO, le dispositif maître lit des informations de registre d'état de téléchargement du dispositif esclave au moyen d'une commande de protocole MDIO,
le dispositif maître détermine, conformément aux informations de registre d'état de téléchargement, si le dispositif esclave a reçu normalement un groupe précédent de paquets de données ;
si c'est le cas, le téléchargement d'un nouveau groupe de paquets de données par lots débute ; sinon, le dispositif esclave est amené à interrompre le téléchargement par lots.

4. Procédé selon la revendication 1 ou 2, **caractérisé en ce qu'**il comprend en outre l'étape au cours de laquelle :
pendant le déroulement de la transmission des paquets de données par lots, par le dispositif maître auprès du dispositif esclave au moyen de la trame MDIO, s'il se produit une anomalie du dispositif maître ou du dispositif esclave et que le téléchargement par lots des paquets de données n'est pas interrompu,
le dispositif maître établit une valeur du champ d'adresse du paquet de données ou du champ de numéro de série du paquet de données de la trame MDIO pour indiquer au dispositif esclave d'interrompre le téléchargement par lots des paquets de données.

5. Procédé selon la revendication 1 ou 2, **caractérisé en ce que,** avant l'étape au cours de laquelle le dispositif maître ordonne au dispositif esclave d'utiliser l'interface MDIO pour commencer à télécharger les paquets de données par lots, le procédé comprend en outre l'étape au cours de laquelle :
le dispositif maître établit une longueur de la trame MDIO conformément aux conditions matérielles du dispositif esclave.

6. Système de téléchargement reposant sur une interface d'entrée/sortie de données de gestion (MDIO, Management Data Input/Output), **caractérisé en ce qu'**il comprend :
un dispositif maître (702) et un dispositif esclave (704), étant entendu que :
le dispositif maître (704) comprend :
un module de commande (7022) configuré pour ordonner au dispositif esclave, au moyen d'une commande de protocole MDIO, d'utiliser l'interface MDIO pour commencer à télécharger des paquets de données par lots, ladite commande de protocole MDIO comprenant des informations de registre de téléchargement, lesdites informations de registre de téléchargement comprenant les numéros de série des paquets de données transmis par lots par le dispositif maître auprès du dispositif esclave, et
un module de transmission (7024) configuré pour transmettre les paquets de données par lots auprès du dispositif esclave au moyen d'une trame MDIO, ladite trame MDIO comprenant : un champ d'adresse du paquet de données et un champ de numéro de série du paquet de données, ledit champ d'adresse du paquet de données servant à indiquer l'adresse relative d'un paquet de données dans le dispositif esclave, et le champ de numéro de série du paquet de données sert à indiquer l'emplacement dudit un paquet de données parmi de multiples paquets de données ;
le dispositif esclave (704) comprend un module de réception de commande, qui est configuré pour recevoir la commande de protocole MDIO et acquérir les numéros de série, et
le dispositif esclave est configuré pour recevoir les trames MDIO transmises par le dispositif maître, analyser les paquets de données à partir des trames MDIO, et stocker les données des paquets de données dans le dispositif esclave conformément aux adresses indiquées par le champs d'adresse des paquets de données ou conformément aux numéros de série indiqués par le champ de numéro de série des paquets de données ; ledit dispositif esclave (704) comprenant en outre :
un module de détermination (7042) configuré pour déterminer, conformément aux numéros de série, qu'un paquet de données reçu est le dernier paquet de données d'une émission actuelle de lots en provenance du dispositif maître, et
un module d'interruption (7044) configuré pour interrompre le téléchargement d'un lot actuel.

7. Système selon la revendication 6, **caractérisé en ce que** la trame MDIO emploie un champ inactif d'un nombre défini de bits pour remplacer un champ de préambule.

8. Système selon la revendication 6 ou 7, **caractérisé en ce que** le dispositif maître comprend en outre :
un module de décision (8030), configuré pour : pendant le déroulement de la transmission des paquets de données par lots auprès du dispositif esclave au moyen de la trame MDIO, s'il se produit une anomalie du dispositif maître ou du dispositif esclave et que le téléchargement par lots des paquets de données n'est pas interrompu, établir une valeur du champ d'adresse du paquet de données ou du champ de numéro de série du paquet de données de la trame MDIO pour indiquer au dispositif esclave d'interrompre le téléchargement par lots des paquets de données.
